Europäisches Patentamt

(19) European Patent Office

Office européen des brevets

(11) Publication number: **0 203 629**
**B1**

## (12) EUROPEAN PATENT SPECIFICATION

(45) Date of publication of the patent specification:
19.07.89

(51) Int. Cl.⁴: **G02B 26/10**, G02B 5/08,
G02B 7/18

(21) Application number: 86200539.4

(22) Date of filing: 01.04.86

(54) Rotatable body, in particular a polygonal mirror.

(30) Priority: 19.04.85 NL 8501142

(43) Date of publication of application:
03.12.86 Bulletin 86/49

(45) Publication of the grant of the patent:
19.07.89 Bulletin 89/29

(84) Designated Contracting States:
DE FR GB NL

(56) References cited:
DE-C- 639 296
FR-A- 2 388 291
US-A- 2 010 411
US-A- 4 141 620

PATENTS ABSTRACTS OF JAPAN, vol. 8,
no. 125 (P-279)[1562], 12th June 1984; & JP - A
- 59 30 513 (CANON K.K.) 18-02-1984

(73) Proprietor: Océ-Nederland B.V., St. Urbanusweg 43,
NL-5914 CC Venlo(NL)

(72) Inventor: Witteveen, Bontko, Grimmmstraat 22,
NL-5924 EC Venlo(NL)

(74) Representative: Hanneman, Henri W.A.M. et al,
Océ-Nederland B.V. Patents and Information
Postbus 101, NL-5900 MA Venlo(NL)

## Description

This invention relates to a device comprising a rotatable body in which a central bore enclosing an axis of rotation is made, and means for connecting the body to the axis of rotation.

Such a device is known from the German Patent Specification 27 17 299.

It describes a rotatable body, consisting of a polygonal mirror, which is rigidly attached, by use of an adjusting disc, to an axis of rotation, the disc being provided with a plurality of set screws. Using a resilient element, the rotatable body is pressed against the set screws of the adjusting disc, so that the body can be positioned relative to the axis of rotation by means of said set screws. The known device has the drawback that the required positioning is obtained against the action of a certain spring force, so that precise positioning may be disturbed upon rotation of the body (certainly at high speeds). In addition, the drive torque of the axis of rotation is transmitted to the body through the resilient element, as a result of which differences in the rotational speeds of the axis of rotation and the body may occur.

It is the object of the invention to provide a device according to the preamble, in which the said disadvantages do not arise. This object is attained according to the invention by a device as meant in the preamble, which is characterized in that the means for connecting the body to the axis of rotation comprise a first fastening zone, in which the body is rigidly connected to the axis of rotation, and a second fastening zone at a distance from the first fastening zone, in which set screws are spaced at regular intervals over the circumference of the body, said set screws being able to be screwed through the body towards the axis of rotation in order to position the body relative to the axis of rotation, and in that the central bore of the body, at least from the first fastening zone and viewed in the direction of the second fastening zone, has a diameter being larger than the diameter of the axis of rotation.

In this way it is attained that a pronounced, stable positioning of the body relative to the axis of rotation is obtained in a simple way.

According to the invention the rigid connection in the first fastening zone is preferably achieved by means of an interference fit, a reliable connection between the body and the axis of rotation thus being formed in a simple way.

The device according to the invention is eminently suited to be used as a support for a second rotatable body, for example a polygonal mirror, so that with the aid of the set screws fitted in the second fastening zone the rotatable body can so be adjusted relative to the axis of rotation that the plane of rotation of the second rotatable body (the polygonal mirror) is perpendicular to the axis of rotation.

The invention will be explained with reference to the accompanying drawings, in which:

Fig. 1 is a top view of a first embodiment of the device according to the invention,

Fig. 2 is a cross section according to the line II - II in Fig. 1,

Fig. 3 is a cross section of a second embodiment of the device according to the invention, and

Fig. 4 is a cross section of a third embodiment of the device according to the invention.

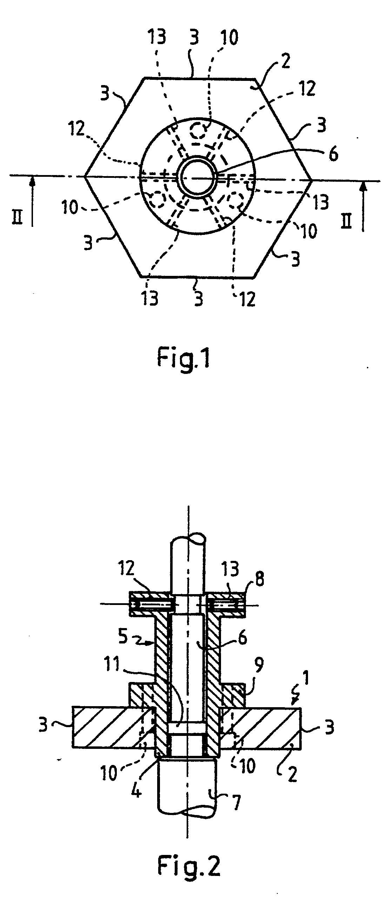

Figs. 1 and 2 represent a device for driving and positioning a polygonal mirror. This polygonal mirror 1 consists of an hexagonal disc 2, which has its side faces 3 provided with specular reflecting surfaces. Made in disc 2 is a central bore, with which the disc is mounted on end 4 of a bearing bush 5. The bearing bush in its turn is rigidly connected to shaft end 6 of drive shaft 7 of a motor (not shown).

The bearing bush 5 is largely cylinder-shaped, except for two flangelike thickenings 8 and 9. The inner diameter of bearing bush 5 is larger than the diameter of shaft end 6. Preferably, the difference in diameter is between 100 μm and 1 mm. The rigid connection between the polygonal mirror and the bearing bush 5 is realized by means of a plurality of screws 10 which, spaced at equal distances over the circumference, are screwed through disc 2 into flange 9 of bearing bush 5. Other connecting techniques, such as gluing, also are considered for this rigid connection.

The fastening of bearing bush 5 to shaft end 6 is effected in two fastening zones. The first fastening zone is formed by a thickening 11, some millimetres in width, of shaft end 6. The thickened shaft end 6 has such a diameter that in combination with the inner diameter of bearing bush 5 an interference fit is created, so that at that place the bearing bush is rigidly connected to shaft end 6. The required quality of the fit is determined by the mass of the device and the drive torque of the motor, starting from the requirement that slip may not occur between shaft end 6 and bearing bush 5.

Based on these conditions, those skilled in the art can select the proper fit to every diameter of the shaft.

The second fastening zone is situated at the place of flange 8 of bearing bush 5. In this flange 8 three set screws 12 are provided, spaced at equal distances over its circumference, which in radial direction can be screwed towards the locally narrowed shaft end 6. Movement of the set screws 12 in radial direction relative to the shaft end 6, will cause bearing bush 5 to be tilted about the first fastening zone.

By tilting bearing bush 5 carrying the polygonal mirror 1 it is possible to adjust the plane of rotation of the polygonal mirror 1 perpendicular to the drive shaft.

The centre of tilt, so the first fastening zone, is situated in the centre of the polygonal mirror 1 in order that movements other than tilting are excluded as much as possible.

The bearing bush 5 should be rigid, so that deformation of the bush cannot occur, but only tilting about the first fastening zone. The desired rigidity is achieved by a combination of material choice and dimensioning. A suitable material for the bearing bush is carbon steel.

Moving of the three set screws 12 may cause unbalance developing in the rotation of the polygonal mirror.

Three balance screws 13 are fitted in flange 8, between the three set screws 12. Correct radial movement of the screws 13 makes it possible to balance the device again.

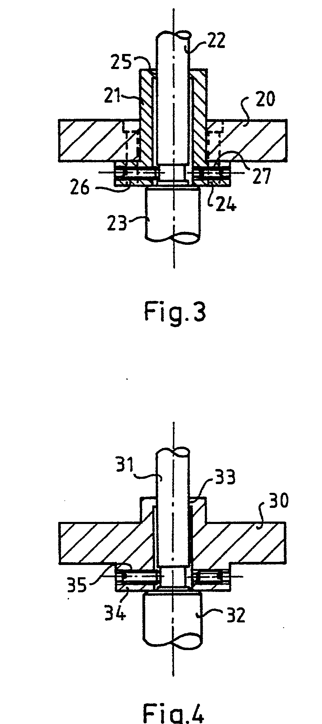

Fig. 3 represents a second embodiment of the device according to the invention in cross section.

In the same way as described with respect to Figs. 1 and 2 a polygonal mirror 20 is rigidly connected to a bearing bush 21. Again, this bearing bush is in its turn rigidly attached to shaft end 22 of a drive shaft 23, by means of two fastening zones.

The shape of bearing bush 21 is largely equal to the bearing bush 5 described with respect to Figs. 1 and 2, it being understood that now only one flangelike thickening 24 is provided.

In this embodiment the two fastening zones of the bearing bush 21 with shaft end 22 are formed by a first fastening zone 25, at one end of the bearing bush 21, and a second fastening zone, at the place of flange 24. In the first fastening zone 25 again a rigid connection is realized through an interference fit for which the same conditions and demands as described with respect to Figs. 1 and 2 are applicable. Three set screws 26, with which the position of bearing bush 21 relative to shaft end 22 can be adjusted through tilting about the first fastening zone 25, are fitted in flange 24.

In conformity with the screws 13 from the first embodiment, the three balance screws 27 ofer the possibility to balance the device.

Finally, Fig. 4 represents a cross-sectional view of a third embodiment of the device according to the invention.

In this embodiment the polygonal mirror 30 is attached directly to shaft end 31 of drive shaft 32. For that purpose the polygonal mirror 30 is provided with a central bore having a diameter that throughout practically the entire length is larger than the diameter of the shaft end 31 (preferably 100 µm - 1 mm larger).

The attachment of the polygonal mirror 30 is realized by means of two fastening zones, as is the attachment of the bearing bushes 5 and 21 respectively, from the previous embodiments.

The first fastening zone 33 forms a rigid connection through an interference fit. Again, the second fastening zone 34 is designed with the possibility to adjust the position of the polygonal mirror 30 relative to the drive shaft by means of three set screws.

The above described embodiments for a polygonal mirror can be applied, **inter alia**, in an electrophotographic image-forming device as described in United States Patent No. 4,140,903.

## Claims

1. A device comprising a rotatable body (5, 21,30) in which a central bore enclosing an axis of rotation (6, 22,31) is made, and means for connecting the body to the axis of rotation, **characterised in that** the means for connecting the body (5, 21, 30) to the axis of rotation (6, 22, 31) comprise a first fastening zone (11, 25, 33), in which the body (5,21,30) is rigidly connected to the axis of rotation (6,22,31), and a second fastening zone (8, 24, 34), at a distance from the first fastening zone (11,25,33), in which set screws (12, 26, 35) are spaced at regular intervals over the circumference of the body (5,21,30), said set screws (12,26,35) being able to be screwed through the body (5,21,30) towards the axis of rotation (6,22,31) in order to position the body (5,21,30) relative to the axis of rotation (6,22,31), and in that the central bore of the body (5,21,30), at least from the first fastening zone (11,25,33) and viewed in the direction of the second fastening zone (8,24,34), has a diameter being larger than the diameter of the axis of rotation (6,22,31).

2. A device according to claim 1, **characterized in that** the means for forming the rigid connection in the first fastening zone (11, 25, 33) consist of an interference fit.

3. A device according to claim 1 or 2, **characterized in that** a second rotatable body (1,20) is rigidly connected to the said rotatable body (5,21), the said rotatable body (5,21) being able with the aid of the set screws (12,26) fitted in the second fastening zone (8,24) to be adjusted so relative to the axis of rotation (6,22) that the plane of rotation of the second rotatable body (1,20) is perpendicular to the axis of rotation.

4. A device according to claim 1 or 2, **characterized in that** the said rotatable body (30) consists of a polygonal mirror.

5. A device according to claim 3, **characterised in that** the second rotatable body (1,20) consists of a polygonal mirror.

## Patentansprüche

1. Vorrichtung mit einem drehbaren Körper (5, 21, 30), in dem eine Drehachse (6, 22, 31) einschliessende Mittelbohrung ausgebildet ist, und mit Mitteln zur Verbindung des Körpers mit der Drehachse, dadurch gekennzeichnet, dass die Mittel zur Verbindung des Körpers (5, 21, 30) mit der Drehachse (6, 22, 31) eine erste Befestigungszone (11, 25, 33), in der der Körper (5, 21, 30) starr mit der Drehachse (6, 22, 31) verbunden ist, und eine in Abstand zu der ersten Befestigungszone (11, 25, 33) angeordnete zweite Befestigungszone (8, 24, 34) aufweisen, in der Stellschrauben (12, 26, 35) in gleichmässigen Abständen auf dem Umfang des Körpers (5, 21, 30) angeordnet sind, wobei die Stellschrauben (12, 26, 35) durch den Körper (5, 21, 30) in Richtung auf die Drehachse (6, 22, 31) eingeschraubt werden können, um den Körper (5, 21, 30) in Bezug auf die Drehachse (6, 22, 31) zu positionieren, und dass die Mittelbohrung des Körpers (5, 21, 30) wenigstens von der ersten Befestigungszone (11, 25, 33) an und in Richtung der zweiten Befestigungszone (8, 24, 34) gesehen einen Durchmesser aufweist, der grösser ist als der Durchmesser der Drehachse (6, 22, 31).

2. Vorrichtung nach Anspruch 1, dadurch gekennzeichnet, dass die Mittel zur Bildung der starren Verbindung in der ersten Befestigungszone (11, 25, 33) durch eine Presspassung gebildet werden.

3. Vorrichtung nach Anspruch 1 oder 2, dadurch gekennzeichnet, dass ein zweiter drehbarer Körper (1, 20) starr mit dem drehbaren Körper (5, 21) verbunden ist und dass der drehbare Körper (5, 21) mit Hilfe der in der zweiten Befestigungszone (8, 24) angebrachten Stellschrauben (12, 26) so in Bezug auf die Drehachse (6, 22) einstellbar ist, dass die Drehebene des zweiten drehbaren Körpers (1, 20) rechtwinklig zu der Drehachse verläuft.

4. Vorrichtung nach Anspruch 1 oder 2 dadurch gekennzeichnet, dass der drehbare Körper (30) ein Polygonalspiegel ist.

5. Vorrichtung nach Anspruch 3, dadurch gekennzeichnet, dass der zweite drehbare Körper (1, 20) ein Polygonalspiegel ist.

**Revendications**

1. Dispositif comprenant un corps rotatif (5, 21, 30) dans lequel est formé un trou central entourant un axe de rotation (6, 22, 31), et un dispositif de connexion du corps à l'axe de rotation, caractérisé en ce que le dispositif de connexion du corps (5, 21, 30) à l'axe de rotation (6, 22, 31) comporte une première zone de fixation (11, 25, 33) dans laquelle le corps (5, 21, 30) est raccordé rigidement à l'axe de rotation (6, 22, 31) et une seconde zone de fixation (8, 24, 34) placée à distance de la première zone de fixation (11, 25, 33) et dans lequelle des vis d'arrêt (12, 26, 35) sont espacées à intervalles réguliers à la circonférence du corps (5, 21, 30), les vis d'arrêt (12, 26, 35) pouvant être vissées dans le corps (5, 21, 30) vers l'axe de rotation (6, 22, 31) afin que le corps (5, 21, 30) soit positionné par rapport à l'axe de rotation (6, 22, 31), et en ce que le trou central du corps (5, 21, 30) a un diamètre supérieur à celui de l'axe de rotation (6, 22, 31) au moins à partir de la première zone de fixation (11, 25, 33) dans la direction de la seconde zone de fixation (8, 24, 34).

2. Dispositif selon la revendication 1, caractérisé en ce que le dispositif destiné à former la connexion rigide dans la première zone de fixation (11, 25, 33) est un emmanchement à force.

3. Dispositif selon la revendication 1 ou 2, caractérisé en ce qu'un second corps rotatif (1, 20) est fixé rigidement au corps rotatif (5, 21), ce dernier corps rotatif (5, 21) pouvant être réglé à l'aide des vis d'arrêt (12, 26) disposées dans la seconde zone de fixation (8, 24) par rapport à l'axe de rotation (6, 22), d'une manière telle que le plan de rotation du second corps rotatif (1, 20) est perpendiculaire à l'axe de rotation.

4. Dispositif selon la revendication 1 ou 2, caractérisé en ce que le corps rotatif (30) est un miroir polygonal.

5. Dispositif selon la revendication 3, caractérisé en ce que le second corps rotatif (1, 20) est un miroir polygonal.

Fig.1

Fig.2

Fig.3

Fig.4